(19) Europäisches Patentamt
European Patent Office
Office européen des brevets

(11) EP 0 895 926 B1

(12) EUROPEAN PATENT SPECIFICATION

(45) Date of publication and mention
of the grant of the patent:
29.11.2006 Bulletin 2006/48

(51) Int Cl.:
B62M 11/16 (2006.01)

(21) Application number: 98306270.4

(22) Date of filing: 05.08.1998

(54) **Hub transmission for a bicycle**

Antriebsnabe für Fahrrad

Moyeu d'entraînement pour bicyclette

(84) Designated Contracting States:
DE FR GB IT

(30) Priority: 08.08.1997 JP 21523597

(43) Date of publication of application:
10.02.1999 Bulletin 1999/06

(73) Proprietor: SHIMANO INC.
Osaka 590-8577 (JP)

(72) Inventor: Tabe, Koshi
Sakai-shi,
Osaka (JP)

(74) Representative: Murnane, Graham John et al
Murgitroyd & Company
165-169 Scotland Street
Glasgow G5 8PL (GB)

(56) References cited:
DE-A- 1 750 897      DE-A- 2 929 445
DE-A- 4 229 023      DE-C- 179 072
US-A- 3 143 005

## Description

### Background of the Invention

The present invention relates to a shifter hub, and more particularly to an internal bicycle shifter hub for changing the speed of rotation of an input unit and transmitting the result to an output unit.

Small bicycles (referred to as "BMX") having 20-inch wheels are used in off-road motocross racing. In such BMX bicycles, the rear wheel is commonly driven at a fixed gear ratio of about 43 teeth on the chainwheel and about 16 teeth on the rear-wheel hub cog.

A fast start dash is an important element of BMX motocross racing. Downshifting to a slightly lighter gear ratio than during normal riding is recommended during start-up in order to achieve higher start-up acceleration. For this reason, BMX bicycles used in motocross racing are equipped with an external shifter (comprising a rear derailleur and a hub cog having two cross-ratio sprockets) and a shifting lever linked by a cable to the rear derailleur.

Installing an external shifter, however, makes it necessary for the rider to control this shifter by operating a shifting lever. Since BMX motocross racing involves navigating a course having a succession of small bumps and curves, the rider is busy steering and does not have much time for shifting. Consequently, it is very difficult to shift gears during a race.

In view of this, it is possible to adopt an approach whereby the rear wheel is equipped with an internal shifter hub, and the gears are shifted automatically by changing the speed of the internal shifter hub in accordance with the bicycle speed. Such an internal shifter hub comprises a hub axle, a driver capable of rotating about the hub axle, a hub shell, a planetary gear mechanism for changing the speed of rotation of the driver and transmitting the result to the hub shell, a clutch mechanism for transmitting the output of the planetary gear mechanism to the hub shell or stopping such transmission, and a clutch-switching mechanism for switching the clutch mechanism by centrifugal force, for example.

Bearing components are provided between one end of the driver and the hub axle, between one end of the hub shell and the other end of the driver, and between the other end of the hub shell and the hub axle, allowing the driver and the hub shell to rotate about the hub axle. The planetary gear mechanism comprises an inner-tooth gear, a sun gear, a plurality of planetary gears for meshing with the inner-tooth gear and the sun gear, and a carrier for supporting the plurality of planetary gears. The clutch-switching mechanism switches the clutch mechanism between a linked state and a disengaged state through the agency of a centrifugal force created by the rotation of the hub shell. Example of such internal shifter hubs can be seen in DE 4229023A, US 2747708, DE 1150592 and US 4973297.

When the gear ratio of an internal shifter hub thus constructed is lowered a cross ratio is achieved (that is, when the rotation of the hub shell remains mostly unchanged in relation to the rotation of the driver), the number of teeth of the inner-tooth gear must be fairly high in relation to the number of teeth of the sun gear. Consequently, the gap between the inner-tooth gear and the sun gear is increased, as is the outside diameter of the planetary gears.

In addition, the outside diameters of the planetary gears are sometimes increased when the gear ratio is raised. When, for example, a planetary gear consists of two gear elements (a large element and a small element), the sun gear is caused to mesh with the small gear element, and the inner-tooth gear is caused to mesh with the large gear element, then raising the gear ratio increases the outside diameter of the large gear element.

The outside diameter of the driver increases when the outside diameters of the planetary gears are increased in such a manner. (This applies when, for example, an inner-tooth gear is formed on the inner circumferential surface of the driver, and a downshift is performed by inputting motive force from the inner-tooth gear and providing an output from a carrier via the planetary gears.) Increasing the outside diameter of the driver results in a further increase in the outside diameter of at least one of the bearing components provided at the two ends of the driver in order to support this driver because a planetary gear mechanism can be mounted inside in the axial direction. The outside diameter of the internal shifter hub increases as a result.

An object of the present invention, therefore, is to reduce the outside diameter of the entire assembly even when the planetary gears have large outside diameters.

### Summary of the Invention

The present invention is directed to a bicycle hub transmission in accordance with Claim 1. A preferred embodiment comprises a hub axle, a driver, and a planetary gear mechanism. The hub axle is an axle that can be fixed on a bicycle frame. The driver is a member which has a first cylindrical body linkable to the input unit and a second cylindrical body linked non-rotatably in relation to the first cylindrical body, in which a housing space is provided inside at least one of the two cylindrical bodies, and which is allowed to rotate about the hub axle. The slave is a member that is disposed at least partially around the inside of the second cylindrical body, that is allowed to rotate about the hub axle, and that is linkable to the output unit. The planetary gear mechanism is a mechanism that is disposed in the housing space and that is designed to change the speed of the motive power from the driver and transmitting the result to the slave.

With the internal shifter hub, the rotation of the input unit is transmitted to the slave from the driver via the planetary gear mechanism, changing the speed of the slave. This driver has a first cylindrical body and a second cylindrical body, and the planetary shifting mechanism is disposed in the housing space of one of the cylindrical bodies but not in the other. As a result, a driver whose outside diameter is less than that of one of the cylindrical bodies having housing spaces can be obtained by providing each of the cylindrical bodies with small-diameter bearing components for supporting the driver. Consequently, the outside diameter of the entire internal shifter hub can be reduced even when the housing space of the driver accommodates a planetary gear mechanism having planetary gears of large outside diameter.

Preferably, the outside diameter of one of the first cylindrical body and second cylindrical body is equal to or less than the outside diameter of the other cylindrical body. Because in this case the outside diameter of one of the cylindrical bodies does not exceed the outside diameter of the other cylindrical body even when the former accommodates a planetary gear mechanism, the driver has a small outside diameter, making it possible for the internal shifter hub to remain small in terms of outside diameter.

Preferably, the first cylindrical body has an input unit fitting point for non-rotatable attachment of the input unit to the outer circumferential surface. In this case, it is possible, for example, to detachably mount an input unit such as a sprocket on the outer circumferential surface of the first cylindrical body.

Preferably, the ball races for allowing rotation about the hub axle are provided to the inner circumferential surfaces of the first cylindrical body and second cylindrical body. In this case, bearing components can be easily provided to the corresponding cylindrical bodies of the driver.

Preferably, the first cylindrical body and second cylindrical body are threadably joined with the aid of an internal/ external thread in a mutually non-rotatable fashion. In this case, the two cylindrical bodies can be easily linked by a threaded joint.

Alternatively, the first cylindrical body and second cylindrical body can be easily joined by a serration joint in a non-rotatable fashion.

Preferably, either of the first and second cylindrical bodies has a stop that rests against the tip of the other cylindrical body. In this case, the two cylindrical bodies can be positioned in the axial direction with higher accuracy.

Preferably, the planetary gear mechanism comprises an inner-tooth gear disposed on the inner circumferential surface of the first cylindrical body; a sun gear provided to the outer circumferential surface of the hub axle; one or more planetary gears for meshing with the inner-tooth gear and sun gear; and a frame body that is allowed to rotate about the hub axle, that is designed to rotatably support the planetary gears, and that is coupled with the slave; the rotation of the driver being reduced in speed and transmitted to the slave. In this case, the outside diameter of the driver is not increased over that of the first cylindrical body, and the internal shifter hub can remain small in terms of outside diameter even when the speed of rotation of the driver is reduced at a low gear ratio.

Preferably, the planetary gear comprises a small-diameter first gear element for meshing with the inner-tooth gear, and a large-diameter second gear element that is disposed concentrically with, and in proximity to, the axial direction of the first gear element, and that is designed to mesh with the sun gear. In this case, the gear ratio of the planetary gear mechanism can be further lowered without increasing the outside diameter of the inner-tooth gear.

Preferably, the first cylindrical body comprises a large-diameter portion that is linked to the second cylindrical body and that accommodates the second gear element of the planetary gears, and a small-diameter portion which accommodates the first gear element and in which the inner-tooth gear is formed on the inner circumferential surface. In this case, the outside diameter of the input unit can be reduced by attaching the input unit to the outer circumferential surface of the small-diameter portion of the second cylindrical body.

Preferably, the present invention further comprises a clutch mechanism capable of linking and disengaging the slave and the second cylindrical body, and a clutch-switching mechanism for switching the clutch mechanism between a linked state and a disengaged state. In this case, the rotation of the input unit is transmitted unchanged to the output unit via the driver and the slave when the clutch mechanism is switched by the clutch-switching mechanism, and the slave and the second cylindrical body are linked. When the clutch disengages the slave and the second cylindrical body, the rotation of the input unit is inputted from the driver to the planetary gear mechanism, the speed is reduced through the intermediary of the slave and the frame body, and the result is transmitted to the output unit. Here, the output unit can be rotated at two speeds (direct coupling and reduced speed) by switching the clutch mechanism with the aid of the clutch-switching mechanism.

Preferably, the clutch-switching mechanism switches the clutch mechanism from the disengaged state to the linked state through the intermediary of centrifugal force. In this case, the clutch mechanism is in a disengaged state when the rider steps on the pedals during startup, and the rotation of the input unit is transmitted to the output unit at a reduced speed via a planetary downshifting mechanism. The clutch mechanism is switched from the disengaged state to a linked state, the driver and the slave are directly coupled, and the rotation of the input unit is transmitted unchanged to the output unit when the bicycle speed rises above a prescribed level, and a prescribed centrifugal force is exerted on the clutch-switching mechanism. It is therefore possible to achieve an automatic upshift and to execute the desired start dash without performing any shifting operations.

## Brief Description of the Drawings

Figure 1 shows a side view of a bicycle according to a first embodiment of the present invention.

Figure 2 shows a longitudinal section of an internal shifter hub according to the present invention.

Figure 3 shows a fragmentary cross section of an internal shifter hub according to the present invention.

Figures 4a and 4b show schematic drawings of a planetary gear mechanism.

Figure 5 shows an exploded perspective view of an internal shifter hub according to the present invention.

Figure 6 shows cross section VI-VI of Figure 3 with the clutch in a disengaged state.

Figure 7 shows a front view of a control plate, with the clutch in a disengaged state.

Figure 8 shows cross section VI-VI of Figure 3 with the clutch in a linked state.

Figure 9 shows a front view of the control plate, with the clutch in a linked state.

Figure 10a shows cross section VI-VI of Figure 3 with the clutch in a disengaged state, according to other embodiments of the present invention.

Figure 10b shows cross section VI-VI of Figure 3 with the clutch in a linked state, according to other embodiments of the present invention.

Figure 11 shows an exploded perspective view of an internal shifter hub according to another embodiment of the present invention.

## Detailed Description of the Embodiments

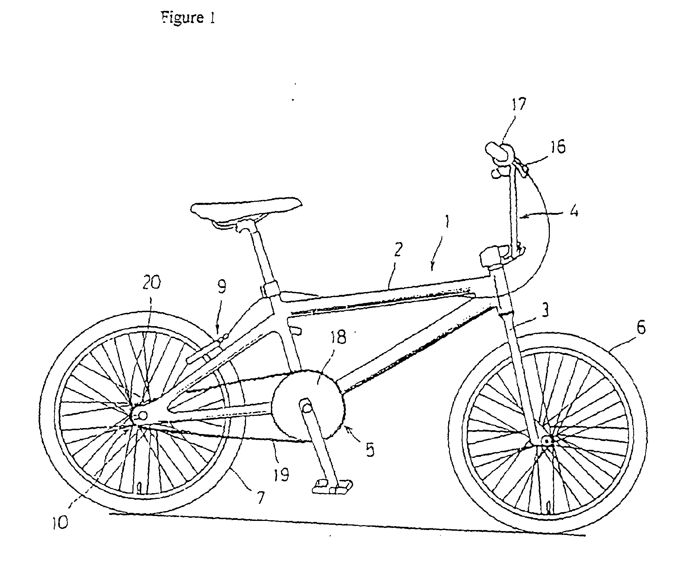

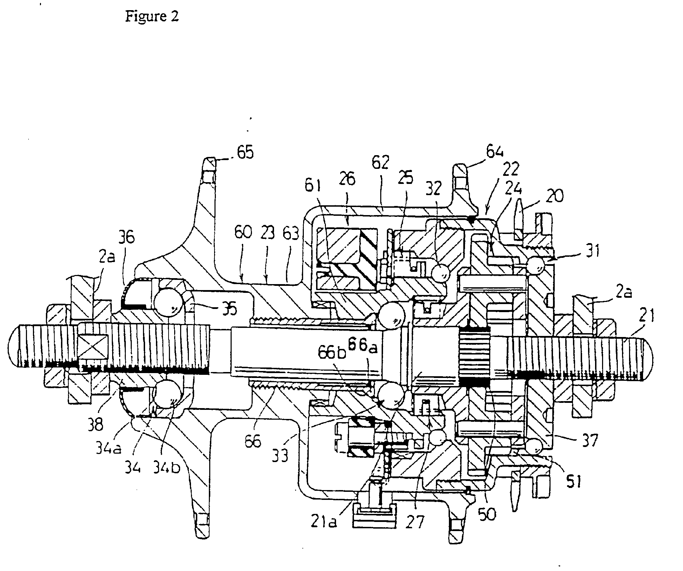

Figure 1 shows a BMX bicycle that comprises a frame 1 composed of a diamond-shaped frame body 2 and a front fork 3, a handle component 4, a driver unit 5, a front wheel 6, a rear wheel 7 provided with a two-speed internal shifter hub 10, and a cantilever-shaped sidepull rear brake device 9 for braking the rear wheel 7.
Components such as a saddle 11, the handle component 4, the front wheel 6, and the rear wheel 7 are mounted on the frame 1.
The handle component 4 has a handle stem 14 that is fixed to the top of the front fork 3, and a handlebar 15 that is fixed to the handle stem 14. A brake lever 16 and a grip 17, which constitute the rear brake device 9, are mounted on the right end of the handlebar 15.
The driver unit 5 comprises a chainwheel 18 mounted in the lower portion (bottom bracket) of the frame body 2, a chain 19 wound around the chainwheel 18, and an internal shifter hub 10 equipped with a sprocket 20.
The internal shifter hub 10 is a two-step hub that includes downshifted and direct-coupled power transmission paths. This internal shifter hub 10 is mounted between a couple of rear fork ends 2a of the bicycle frame body 2, as shown in Figure 2. The internal shifter hub 10 comprises a hub axle 21 fixed in the rear fork ends 2a, a driver 22 mounted around the outside on one end of the hub axle 21 while allowed to move in a circle about the hub axle, a slave 23 that is disposed farther outward around the outside of the hub axle 21 and the driver 22 and that is linked to the rear wheel 7, a planetary gear mechanism 24 disposed around the inside of the driver 22, a clutch mechanism 25 for linking and disengaging the driver 22 and the slave 23, a clutch-switching mechanism 26 for switching the clutch mechanism 25, and a one-way clutch mechanism 27 for transmitting rotation in the travelling direction alone from the planetary gear mechanism 24 to the slave 23. The right end of the driver 22 (Figure 2) is rotatably supported by a bearing component 31 on the hub axle 21, and the left end is rotatably supported by a bearing component 32 in the slave 23. The two ends of the slave 23 are rotatably supported by bearing components 33 and 34 on the hub axle 21.
The hub axle 21 is a member that is fixed to the rear fork ends 2a of the bicycle frame body 2. Threaded portions for fixing or otherwise securing the axle in the rear fork ends 2a are formed on both ends of the hub axle 21. A large-diameter portion 21a is formed on the hub axle 21 to the right (in Figure 2) of the central section, and the sun gear 50 of the planetary gear mechanism 24 is formed on the right side of the large-diameter portion 21a. Hub cone members 37 and 38 having arm-shaped hub cone surfaces 31a and 34a for the bearing components 31 and 34, respectively, are screwed onto the mounting portions of the hub axle 21 that lie inward in relation to the rear fork ends 2a.

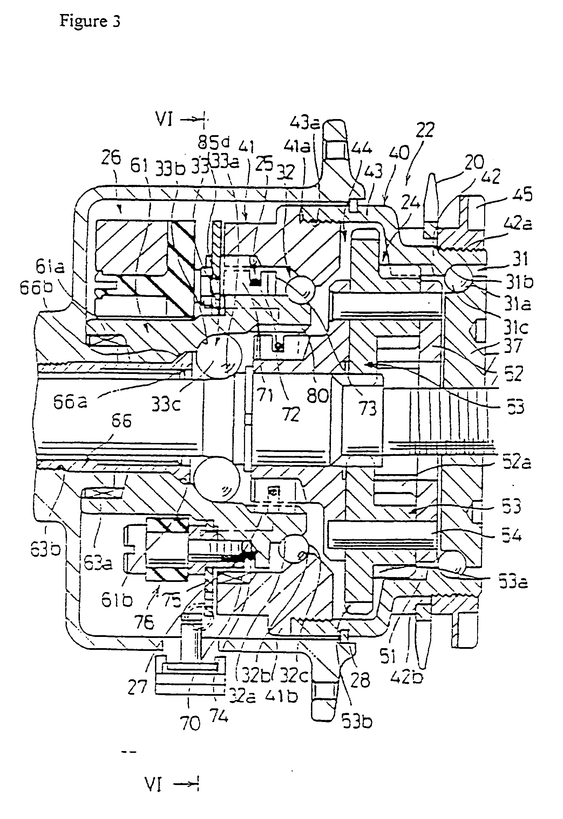

The driver 22 is a member for transmitting the rotation of the sprocket 20. As shown in Figure 3, the driver 22 comprises a first cylindrical component 40 (the right end of this component is rotatably supported by the bearing component 31), and a second cylindrical component 41 that is non-rotatably linked to the first cylindrical component 40 (the left end of the second cylindrical component is rotatably supported by the bearing component 32).

The first cylindrical component 40 comprises a small-diameter portion 42 on the right side of Figure 3, and a large-diameter portion 43 that is flared on the left side of the small-diameter portion 42. A housing space 44 for accommodating the planetary gear mechanism 24 is formed inside the first cylindrical component 40. The outer circumferential surface at the end of the small-diameter portion 42 is provided with an external thread 42a, and a lock nut 45 for fixing the sprocket 20 is screwed thereon. A sprocket attachment section 42b composed of outer serrations is formed on the outer circumferential surface of the small-diameter portion 42 in proximity to the external thread 42a, with the sprocket 20 non-rotatably attached. The inner-tooth gear 51 of the planetary gear mechanism 24 is formed on the inner circumferential surface of the small-diameter portion 42 on the side that faces the large-diameter portion 43. An arm-shaped ball race surface 31b for the bearing component 31 is formed on the inner circumferential surface at the end of the small-diameter portion 42. The bearing component 31 comprises the ball race surface 31b, the hub cone surface 31a, and a plurality of balls 31c interposed between the ball race surface 31b and the hub cone surface 31a.

An internal thread 43a, which is formed on the inner circumferential surface at the end of the large-diameter portion 43, is screwed onto an external thread 41a formed on the end face of the second cylindrical component 41, non-rotatably linking the second cylindrical component 41. A seal ring 28 for sealing the gap formed by the slave 23 is fitted over the outer circumferential surface of the large-diameter portion 43.

The second cylindrical component 41 is a member whose diameter is smaller than that of the first cylindrical component 40 in threaded engagement with the inner circumferential surface of the first cylindrical component. The external thread 41a to be threadably connected with the internal thread 43a is formed on the outer circumferential surface of the end section. A stop 41b that rests against the tip of the large-diameter portion 43 of the first cylindrical component 40 in proximity to the external thread 41a is formed in the outer circumferential surface of the second cylindrical component 41. The outside diameter of the stop 41b is essentially the same size as the outside diameter of the large-diameter portion 43 of the first cylindrical component 40. The bearing component 32 and the clutch mechanism 25 are disposed around the inside of the second cylindrical component 41. For this reason, the ball race surface 32b of the bearing component 32 and the ratchet teeth 70 of the clutch mechanism 25 are formed on the inner circumferential surface of the second cylindrical component 41. The bearing component 32 comprises the ball race surface 32b, a hub cone surface 32a formed on the outer circumferential surface at the end of a power transmitting body 61 (see below) for the slave 23, and a plurality of balls 32c interposed between the ball race surface 32b and the hub cone surface 32a.

Forming the driver 22 in such a manner into a two-part structure composed of the first cylindrical component 40 and second cylindrical component 41 makes it possible to mount the planetary gear mechanism 24 alongside the hub axle 21 without increasing the outside diameter of the section composed of the second cylindrical component 41 in comparison with the outside diameter of the section composed of the first cylindrical component 40 even when a bearing component 32 is provided. The outside diameter of the entire hub can therefore be reduced.

As shown in Figure 2, the slave 23 is a cylindrical member driven by the driver 22 and designed for rotating the rear wheel 7. The slave 23 comprises a hub shell 60 that is partially disposed around the outside of the driver 22, and a power transmitting body 61 that is fastened to the hub shell 60 by a fixing bolt 66 and that is disposed around the inside of the driver 22. This power transmitting body 61, in addition to functioning as a body for transmitting power from the driver 22 or the planetary gear mechanism 24 to the hub shell 60, also functions as a weight support for the clutch-switching mechanism 26 described below.

The hub shell 60, which may be a cylindrical member made of aluminum, has a large-diameter mechanism housing 62 for accommodating the driver 22, the clutch-switching mechanism 26, and the like, and a small-diameter, narrow cylindrical component 63 formed integrally with the mechanism housing 62. Hub flanges 64 and 65 for securing the spokes (not shown) of the rear wheel 7 are integrally formed on the outer circumferential surfaces of the mechanism housing 62 and narrow cylindrical component 63. As shown in Figure 3, the right end of the narrow cylindrical component 63 is provided with outer serrations 63a for non-rotatably securing the power transmitting body 61, and the inner circumferential surface is provided with an internal thread 63b for the threaded engagement of the fixing bolt 66. A space for accommodating the bearing component 34 is formed in the left end (Figure 2) of the narrow cylindrical component 63, and a ball race member 35 provided with a ball race surface 34b (which is an element of the bearing component 34) is secured in this space. The bearing component 34 comprises the hub cone surface 34a, the ball race surface 34b, and a plurality of balls 34c interposed between the ball race surface 34b and the hub cone surface 34a. A dust cap 36 is fitted over the bearing component 34.

The power transmitting body 61 may be a stepped cylindrical member made of chromium-molybdenum steel. As shown in Figure 3, inner serrations 61a for meshing with the outer serrations 63a of the narrow cylindrical component 63 are formed on the inner circumferential surface of the left end. The hub cone surface 32a for the bearing component 32 is formed on the outer circumferential surface at the right end of the power transmitting body 61, and ratchet teeth 80 constituting part of the one-way clutch mechanism 27 are formed on the inner circumferential surface of the right end. In addition, a ball race surface 33b for the bearing component 33 is formed on the inner circumferential surface in proximity to the ratchet teeth 80. The bearing component 33 comprises the ball race surface 33b, a hub cone surface 33a formed in the shape of an arm on the left end of the large-diameter portion 21a of the hub axle 21, and a plurality of balls 33c interposed between the hub cone surface 33a and the ball race surface 33b. A tapered section 61b is formed on the inner circumferential surface of the power transmitting body 61 in proximity to the section constituting the ball race surface 33b.

As shown in Figure 2, the fixing bolt 66 is a hollow cylindrical bolt, and the hub shell 60 and the power transmitting body 61 are firmly fastened in a concentric fashion. The head 66a of the fixing bolt 66 is provided with a tapered surface 66b for interlocking with the tapered section 61b, allowing the power transmitting body 61 and the hub shell 60 to be aligned and fastened.

As shown in Figure 3, the planetary gear mechanism 24 comprises the sun gear 50 formed on the hub axle 21, the inner-tooth gear 51 formed on the small-diameter portion 42 of the first cylindrical component 40 of the driver 22, a carrier 52 rotatably mounted on the large-diameter portion 21a of the hub axle 21, and three planetary gears 53 rotatably supported on the carrier 52. The carrier 52 is a member shaped as a collar flange with the hub axle 21 passing through it; and three gear housings 52a spaced at regular intervals in the circumferential direction are formed on the outer circumferential surface of this member. Three gear axles 54 for rotatably supporting the planetary gears 53 are fixed to the carrier 52. The planetary gears 53 have a small-diameter first gear element 53a for meshing with the inner-tooth gear 51, and a large-diameter second gear element 53b for meshing with the sun gear 50. The first gear element 53a and the second gear element 53b are formed adjacent to each other in the axial direction. The planetary gears 53 are thus composed of two gear elements 53a and 53b, making it possible to obtain a gear ratio corresponding to a cross ratio with a smaller number of teeth on the inner-tooth gear than in the case of a single gear element.

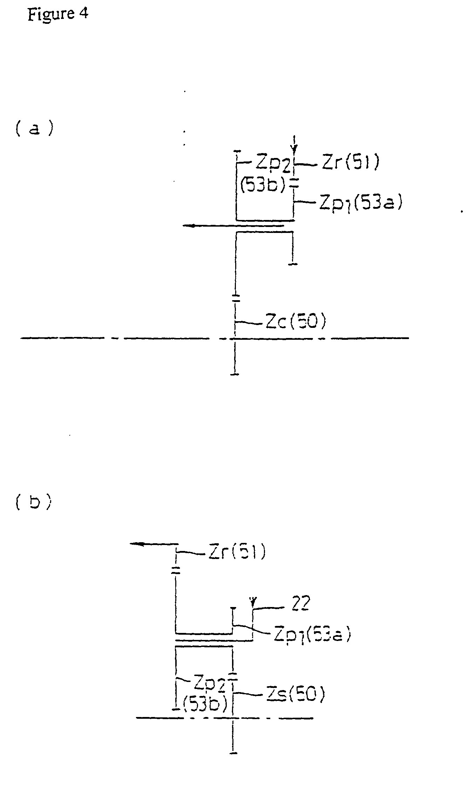

Here, as shown in Figure 4a, the gear ratio $G_R$ can be expressed by the following equation for a downshift in the inner-tooth gear input and carrier output:

$$G_R = 1/(1 + (Z_s/Z_r) \times (Z_{p2}/Z_{p1})),$$

where $Z_s$ is the number of teeth on the sun gear 50, $Z_r$ is the number of teeth on the inner-tooth gear 51, $Z_{p1}$ is the number of teeth on the first gear element 53a of a planetary gear 53, and $Z_{p2}$ is the number of teeth on the second gear element 53b.

Here, the following result may be obtained if the number of teeth $Z_s$ on the sun gear is set to 15, the number of teeth $Z_r$ on the inner-tooth gear to 57, the number of teeth $Z_{p1}$ on the first gear element to 28, and the number of teeth $Z_{p2}$ on the second gear element to 13:

$$G_R = 1/(1 + (15/57) \times (13/28)) = 0.891$$

Consequently, the gear ratio $G_R$ is 0.891, and a single turn of the driver 22 is transmitted to the slave 23 after being reduced in speed to 0.891 revolutions.

The gear ratio of the planetary gear mechanism 24 should fall within a range of 0.8-0.95. In this case, the start dash can be accelerated, and the outside diameter of the internal shifter hub 10 reduced even when downshifting is performed at a cross ratio.

The gear ratio $G_R$ can be expressed by the following equation when downshifting is performed with the aid of planetary gears consisting of a single gear element.

$$G_R = 1/(1 + (Z_s/Z_r))$$

In this case, the gear ratio $G_R$ is determined solely by the number of teeth $Z_r$ on the inner-tooth gear and the number of teeth $Z_s$ on the outer-tooth gear. Let us solve the equation $0.891 = 1/(1 + (15/Z_r))$ in an attempt to obtain a gear ratio of 0.891 with the aforementioned cross ratio by assuming that the number of teeth $Z_s$ on the sun gear is 15.

As a result, the number of teeth $Z_r$ on the inner-tooth gear is 123, and the outside diameter of the driver 22 is increased at least twofold in comparison with a case in which the gear has two gear elements.

As shown in Figures 3, 5, and 6, the clutch mechanism 25 has ratchet teeth 70 (which are formed on the inner circumferential surface of the second cylindrical component 41 of the driver 22), two clutch pawls 71 capable of meshing with the ratchet teeth 70, and a spring member 72 for energizing the clutch pawls 71. The ratchet teeth 70 are formed as sawteeth on the inner circumferential surface of the second cylindrical component 41. The clutch pawls 71 are mounted on the outer circumferential surface of the power transmitting body 61 while allowed to alternate between a linked state in which they mesh with the ratchet teeth 70, and a disengaged state in which they are separated from the ratchet teeth 70. Pawl housings 73 for accommodating the clutch pawls 71 are provided at two positions on the outer circumferential surface of the power transmitting body 61. The spring member 72, which is positioned in a wound state in a groove 74 formed in the outer circumferential surface of the power transmitting body 61, pushes the clutch pawls 71 into a linked state. It is only when the clutch pawls 71 are in a linked state and the driver 22 rotates in the travelling direction that the rotation of the clutch mechanism 25 is transmitted to the power transmitting body 61 of the slave 23.

The clutch-switching mechanism 26 comprises a control plate 75 for switching the clutch pawls 71 between a linked state and a disengaged state, a moving mechanism 76 for moving the control plate 75 in a reciprocating fashion about the hub axle, and a weight support doubling as the power transmitting body 61.

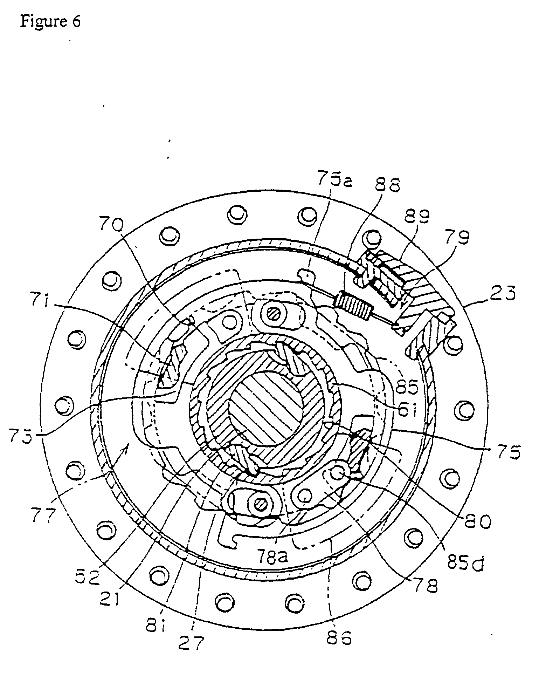

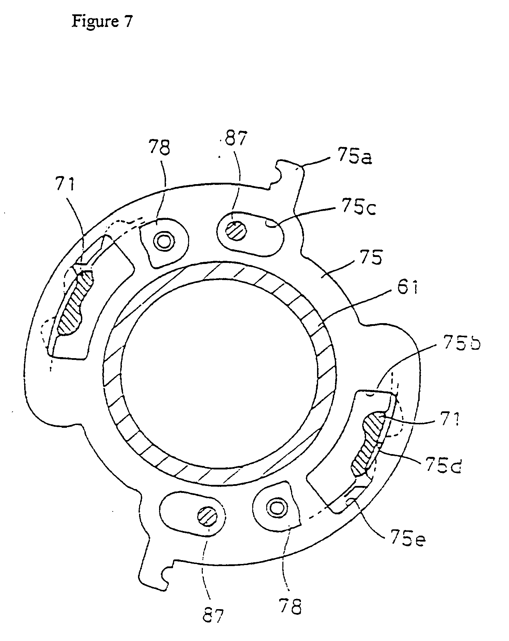

As shown in Figure 7, the control plate 75 is a flat member shaped as a modified ring and rotatably supported in its central portion by the power transmitting body 61. A hook 75a extending radially outward is formed on the outer edge of the control plate 75. In addition, two control windows 75b for controlling the clutch pawls 71 are formed between the inner and outer circumferences. The clutch pawls 71 are disposed such that they extend from the control windows 75b in the direction of the moving mechanism 76. The control windows 75b are provided with disengaging frames 75d for holding the clutch pawls 71 in a disengaged state, and with linking frames 75e for switching the pawls to a linked state. The clutch pawls 71 energized by the spring member 72 can be raised into a linked state by shaping the linking frames 75e such that they extend radially outward from the disengaging frames 75d. The hook 75a, the control windows 75b, and all the other components are set apart 180 degrees from each other (depending on the number of elements) to achieve balanced rotation. In addition, two through holes 75c accommodating the rocking axles 87 of weight retainers 85 (see below) are formed between the inner and outer circumferences. The control plate 75 is normally held in a disengaged position (shown in Figures 6 and 7) by the spring mechanism 79 described below. At this time, the tips of the clutch pawls 71 are stopped by the disengaging frames 75d of the control windows 75b, and the pawls are held in a disengaged state.

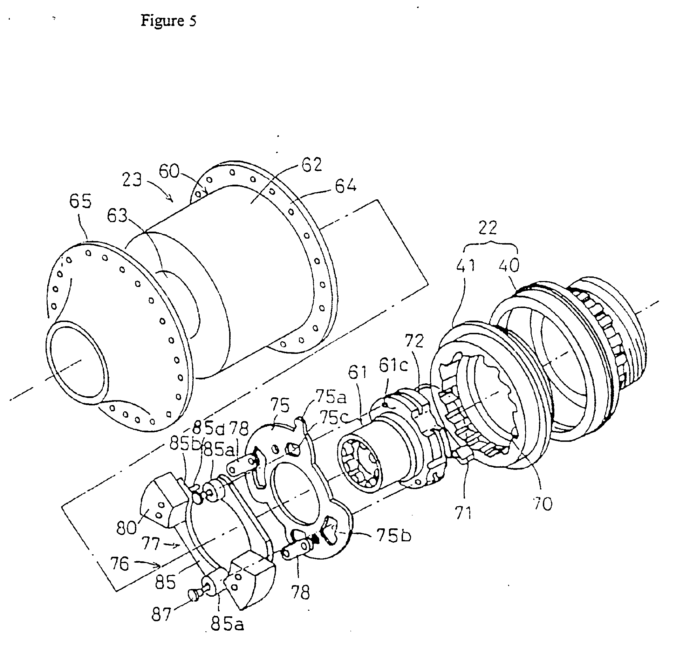

As shown in Figure 5, the moving mechanism 76, which is disposed on the left side of the control plate 75, comprises two rocking weight members 77, links 78 for linking the two respective weight members 77 and the control plate 75, and a spring mechanism 79 for energizing the control plate 75 clockwise in Figure 6.

The weight members 77 comprise two weight retainers 85 swingably mounted on the end face 61c of the power transmitting body 61, and weights 86 mounted on the tips of the weight retainers 85. The two weight retainers 85 may be made of a polyacetal resin. The weight retainers 85 are formed such that they form a curve around the power transmitting body 61, and are positioned in the same way 180 degrees apart from each other around the power transmitting body 61. Bosses 85a are formed integrally with the bases of the weight retainers 85, and weight mounting components 85b composed of two protruding pins are formed integrally with the tips of the weight retainers. The rocking axles 87 pass through the bosses 85a. The rocking axles 87 also pass via the through holes 75c, and the tips of these axles are fixed to the power transmitting body 61. In addition, link pins 85d are formed integrally with the tips of the weight retainers 85 on the sides opposite from the weight mounting components 85b. The link pins 85d are used for the rotatable mounting of the links 78. The weights 86, which may be fan-shaped members made of lead or steel, are fixed by the two pins of weight mounting components 85c.

The links 78 are members for rotating the braking member 75 in response to the movement of the tips of the weight members 78, which are swung by the bases. The control plate 75 and the tips of the weight retainers 85 are linked to the two ends of these links. The links 78 are flat members made of metal. One end of each link is provided with a round hole for inserting the link pins 85d, and the other end is provided with a round hole for inserting a link pin 78a, which is used to achieve linkage with the braking plate 75.

As shown in Figure 6, the spring mechanism 79 has a coil spring 88, one end of which is secured to the hook 75a, and a spring force adjustment mechanism 89 for adjusting the spring force of the coil spring 88. Shift timing can be adjusted by adjusting the spring force of the coil spring 88. The shift timing can also be varied by replacing the weights 86.

As shown in Figure 6, the one-way clutch 27, which may be a pawl type, comprises ratchet teeth 80 formed on the inner circumferential surface of the power transmitting body 61, clutch pawls 81 mounted on the outer circumferential surface of the carrier 52 of the planetary gear mechanism 24 while allowed to alternate between a linked state and a disengaged state, and a spring member (not shown) for energizing the clutch pawls 81 into a linked state. In the one-way clutch 27, the clutch pawls 81 are normally raised into a linked state, and the rotation of the carrier 52 is transmitted to the power transmitting body 61 when this carrier rotates in the travelling direction. No rotation is transmitted when the power transmitting body 61 rotates in the travelling direction at a higher speed than does the carrier 52.

The internal shifter hub 10 has the following paths because of the presence of such a planetary gear mechanism 24, clutch mechanism 25, clutch-switching mechanism 26, and one-way clutch 27:

a downshifted power transmission path composed of the driver 22, inner-tooth gear 50, planetary gear mechanism 24, carrier 52, and slave 23; and a direct-coupled power transmission path composed of the driver 22, clutch mechanism 25, and slave 23.

When the rider steps on the pedals during start-up, propelling the bicycle, the resulting rotation is transmitted to the driver 22 via the sprocket 20. At this time, the control plate 75 is in a disengaged position, and the clutch pawls 71 are held in a disengaged state by the control plate 75. Consequently, there is no linkage between the driver 22 and the power transmitting body 61, and the rotation of the driver 22 is transmitted to the power transmitting body 61 along the downshifted power transmission path. As a result, the rotation of the sprocket 20 during start-up is transmitted to the hub shell 60 after being reduced in speed to 0.891, for example. It is therefore possible to lightly step on the pedals during start-up, achieving a start dash.

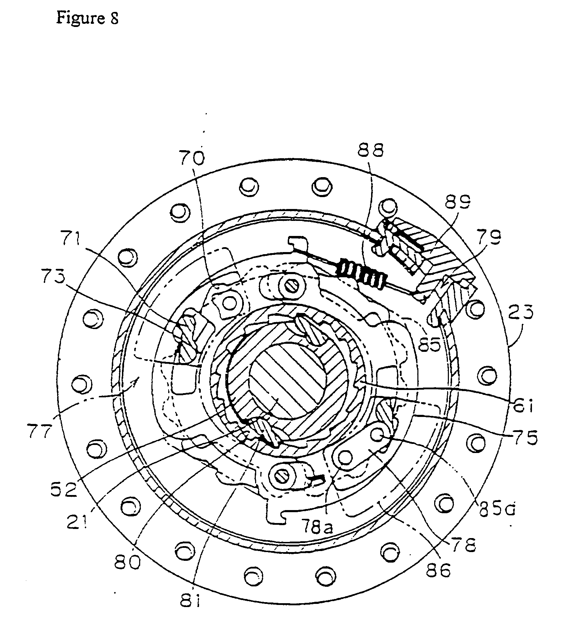

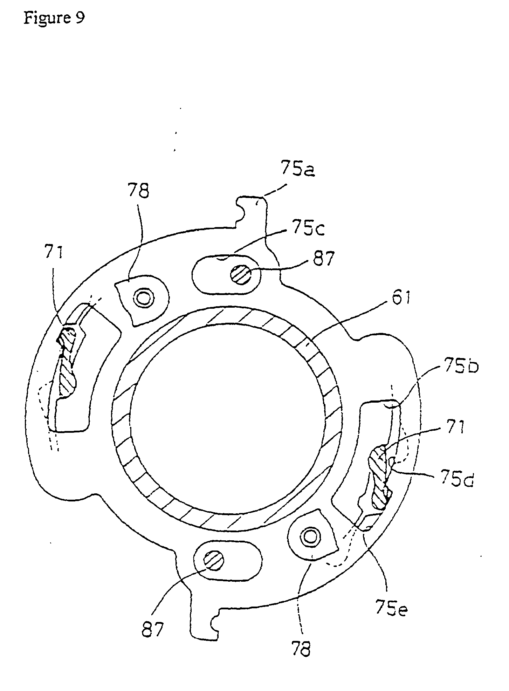

As shown in Figures 8 and 9, the weight members 77 swing outward against the action of the energizing force exerted by the coil spring 88 of the control plate 75 when the power transmitting body 61 achieves a rotational speed above a certain level. This level is determined by the adjustment of the spring mechanism 79, the mass of the weights, or the like. When the weight members 77 move in this manner, the control plate 75 is rotated counterclockwise in Figure 8 through the intermediary of the links 78 until it reaches a linked position. When the control plate 75 has reached the linked position, the linking frames 75e of the control windows 75b position themselves at the tips of the clutch pawls 71, and the clutch pawls 71 are raised into a linked state by the energizing force of the spring member 72. As a result, the rotation of the driver 22 in the travelling direction is transmitted directly to the power transmitting body 61 along the direct-coupled power transmission path, and the rotation of the sprocket 20 is transmitted unchanged to the rear wheel 7. Consequently, an upshift is performed once the rotational speed has exceeded a certain level. There is no reduction in the transmission efficiency of the planetary gear mechanism 24 during this regular ride because the driver 22 and the slave 23 are coupled directly.

When the rotational speed of the power transmitting body 61 drops below a prescribed level during cornering or the like, the weight members 77 are returned to their initial disengaged state by the coil spring 88, and the rotation of the driver 22 is transmitted to the slave 23 along the downshifted power transmission path.

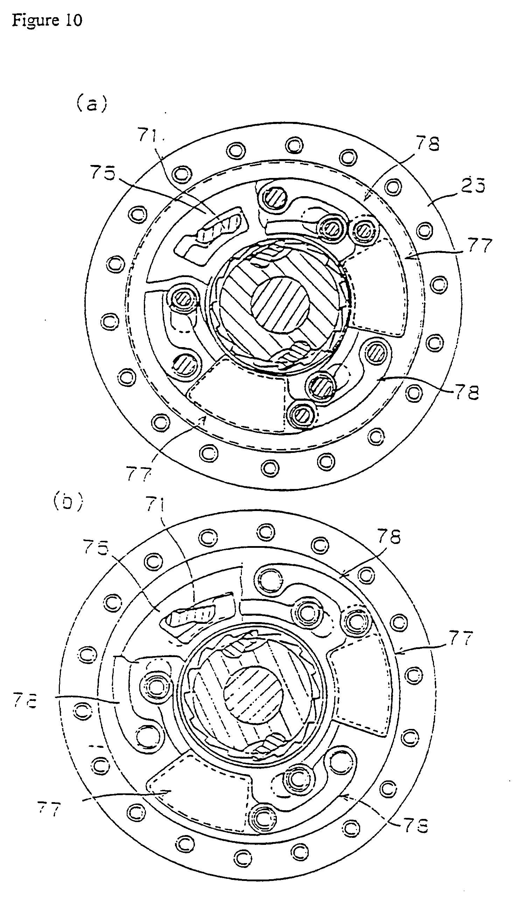

The number of weight members or clutch pawls is not limited to two. One member or pawl can also be used, as can three or more members or pawls. When three or more members or pawls are used, they should be arranged at regular intervals according to their number. When, for example, there are three weight members 77, they should be arranged in the same way 120 degrees apart from each other about the hub axle, as shown in Figure 10a. Furthermore, a single clutch pawl 71 can be used, as can a plurality of such pawls. In this case, the weight members 77 swing outward when the rotational speed has exceeded a certain limit (as shown in Figure 10b), the control plate 75 is rotated through the intermediary of the links 78, and the clutch pawls 71 rise to a linked state from the disengaged state. Thus, the centrifugal force increases with an increase in the number of weight members 77, and the braking plate 75 rotates with more stability.

The embodiment described above pertained to a case in which the speed was changed from direct to reduced, but a shift from a direct speed to a higher speed is also possible. In this case, the driver 22 should be linked to the carrier 52, and power should be transmitted from the carrier 52 to the inner-tooth gear 51, as shown in Figure 4b. At this time, a high gear ratio can be obtained with an inner-tooth gear whose outside diameter is less than that of a single gear element if the second gear element 53b (which, of the two gear elements 53a and 53b, has the larger diameter) is caused to mesh with the inner-tooth gear 51, and the small-diameter first gear element 53a is caused to mesh with the sun gear 50. In addition, the carrier 52 and the driver 22 should be linked together with the aid of the structure shown in Figure 4a if the goal is to obtain an upshifted ratio corresponding to a cross ratio.

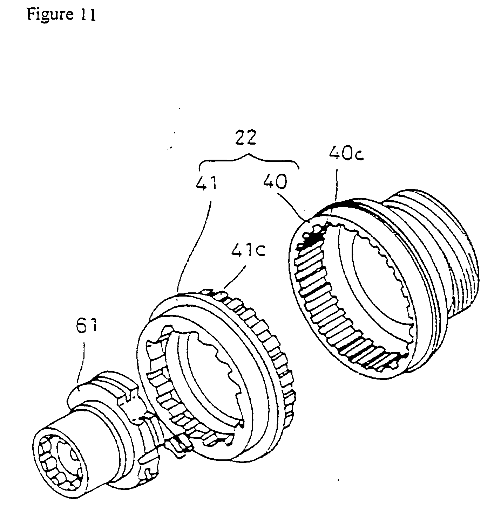

Although the embodiment described above pertained to a case in which the first cylindrical component 40 and the second cylindrical component 41 of the driver 22 were fixed with the aid of a thread, it is also possible, for example, to provide the first cylindrical component 40 and the second cylindrical component 41 with serrations 40c and 41c, respectively, and to fix the two cylindrical components by meshing with the serrations, as shown in Figure 11.

**Claims**

**1.** A bicycle hub transmission comprising:

a hub axle (21) ;
a driver (22) rotatably mounted to the hub axle (21), wherein the driver (22) includes:

a first driving member (40) having a smaller diameter portion (42) with a smaller diameter inner peripheral surface;
a second driving member (41) axially aligned with the first driving member (40) and nonrotatably coupled to the first driving member (40), wherein the second driving member (41) has a smaller diameter portion with a smaller diameter inner peripheral surface, and wherein at least one of the first driving member (40) and the second driving member (41) has a larger diameter portion (43) with a larger diameter inner peripheral surface defining a housing space (44) axially between the smaller diameter inner peripheral surface of the first driving member (40) and the smaller diameter inner peripheral surface of the second driving member (41);
a slave (23) rotatably mounted to the hub axle (21); and
a power transmitting mechanism disposed at least partially in the housing space (44) for changing a rotational speed of the driver (22) and for communicating rotational power from the driver (22) to the slave (23);

**characterised in that** the slave (23) comprises a hub shell (60) and a power transmitting body (61), the power transmitting body (61) being at least partially disposed within the second driving member (41) and non-rotatably secured to the hub shell (60).

2. A bicycle hub transmission according to Claim 1, wherein the first driving member (40) comprises a first cylindrical body and the second driving member (41) comprises a second cylindrical body.'

3. A bicycle hub transmission according to Claim 2, wherein the outside diameter of one of the first or second cylindrical bodies (40,41) is equal to or less than the outside diameter of the other cylindrical body (40,41).

4. A bicycle hub transmission according to either Claim 2 or Claim 3, wherein an outer peripheral surface of the first cylindrical body (40) has an input unit fitting point (42b) for non-rotatable attachment of an input unit (20) thereto.

5. A bicycle hub transmission according to any of Claims 2 to 4, wherein ball races (31,32) for allowing rotation about said hub axle (21) are provided to the inner peripheral surfaces of said first cylindrical body (40) and second cylindrical body (41).

6. A bicycle hub transmission according to Claim 5, wherein one of the ball races (32) is located between the inner peripheral surface of the second cylindrical body (41) and an outer peripheral surface of the slave (23).

7. A bicycle hub transmission according to any of Claims 2 to 6, wherein said first cylindrical body (40) and second cylindrical body (41) are threadably joined with the aid of an internal/external thread (41a,43a) in a mutually non-rotatable fashion.

8. A bicycle hub transmission according to any of Claims 2 to 6, wherein said first cylindrical body (40) and second cylindrical body (41) are joined by a serration joint in a mutually non-rotatable fashion.

9. A bicycle hub transmission according to any of Claims 2 to 8, wherein one of said first and second cylindrical bodies (41) has a stop (41b) that rests against the tip of the other cylindrical body (40).

10. A bicycle hub transmission according to any of Claims 2 to 9, wherein the power transmitting mechanism comprises a planetary gear mechanism (24).

11. A bicycle hub transmission according to Claim 10, wherein the planetary gear mechanism (24) comprises:

an inner-tooth gear (51) disposed on the first cylindrical body (40);
a sun gear (50) provided on the hub axle (21);
one or more planetary gears (53) for meshing with said inner-tooth gear (51) and sun gear (50); and
a frame body (52) that is allowed to rotate about said hub axle (21), that is designed to rotatably support said planetary gears (53), and that is coupled with said slave (23);
the rotation of said driver (22) being reduced in speed and transmitted to said slave (23).

12. A bicycle hub transmission according to Claim 11, wherein said planetary gears (53) comprise:

   a small-diameter first gear element (53a) for meshing with said inner-tooth gear (51); and
   a large-diameter second gear element (53b) that is disposed concentrically with, and in proximity to, the axial direction of said first gear element (53a), and that is designed to mesh with said sun gear (50).

13. A bicycle hub transmission according to Claim 12, wherein said first cylindrical body (40) comprises a large-diameter portion (43) that accommodates the second gear element (53b) of said planetary gears (53).

14. A bicycle hub transmission according to any of Claims 10 to 12, wherein the inner-tooth gear (51) is formed on the smaller diameter inner peripheral surface of the first cylindrical body (40).

15. A bicycle hub transmission according to any of Claims 2 to 14, further comprising:

   a clutch mechanism (27) capable of linking and disengaging said slave (23) and said second cylindrical body (41); and
   a clutch-switching mechanism (26) for switching said clutch mechanism (27) between a linked state and a disengaged state.

16. A bicycle hub transmission according to Claim 15, wherein said clutch-switching mechanism (26) switches said clutch mechanism (27) from the disengaged state to the linked state through the intermediary of centrifugal force.


**Patentansprüche**

1. Eine Antriebsnabe für ein Fahrrad, umfassend:

   eine Nabenachse (21),
   einen Antreiber (22), drehbar auf der Nabenachse (21) gelagert, wobei der Antreiber (22) umfasst:

   ein erstes Antriebselement (40), mit einem kleineren Durchmesserbereich (42) mit einer, einen kleinen Durchmesser aufweisenden inneren Umfangsfläche,
   ein zweites Antriebselement (41), welches axial mit dem ersten Antriebselement (40) ausgerichtet ist und drehfest mit dem ersten Antriebselement (40) verbunden ist, wobei das zweite Antriebselement (41) einen kleineren Durchmesserbereich mit einer, einen kleinen Durchmesser aufweisenden inneren Umfangsfläche aufweist, und wobei mindestens eines des ersten Antriebselements (40) und des zweiten Antriebselements (41) einen größeren Durchmesserbereich (43) mit einer, einen großen Durchmesser aufweisenden, inneren Umfangsfläche umfasst, welche einen Gehäuseraum (44) axial zwischen der, einen kleineren Durchmesser aufweisenden, inneren Umfangsfläche des ersten Antriebselements (40) und der einen kleineren Durchmesser aufweisenden, inneren Umfangsfläche des zweiten Antriebselements (41) bestimmt;
   ein Nachläufer (23), der drehbar auf der Nabenachse (21) angeordnet ist; und
   ein Kraftübertragungsmechanismus, welcher zumindest teilweise innerhalb des Gehäuseraums (44) angeordnet ist, zur Veränderung einer Drehgeschwindigkeit des Antreibers (22) und zur Übertragung von Drehkraft vom Antreiber (22) auf den Nachläufer (23);

   **gekennzeichnet dadurch, dass**
   der Nachläufer (23) ein Nabengehäuse (60) sowie einen Kraftübertragungskörper (61) umfasst, wobei der Kraftübertagungskörper (61) zumindest teilweise innerhalb des zweiten Antriebselements (41) angeordnet und drehfest am Nabengehäuse (60) befestigt ist.

2. Eine Antriebsnabe für ein Fahrrad gemäß Anspruch 1, wobei das erste Antriebselement (40) einen ersten zylindrischen Körper und das zweite Antriebselement (41) einen zweiten zylindrischen Körper umfasst.

3. Eine Antriebsnabe für ein Fahrrad gemäß Anspruch 2, wobei der Außendurchmesser eines des ersten oder zweiten zylindrischen Körpers (40, 41) gleich oder kleiner als der Außendurchmesser des anderen zylindrischen Körpers (40, 41) ist.

4. Eine Antriebsnabe für ein Fahrrad gemäß einem der Ansprüche 2 oder 3, wobei eine äußere Umfangsfläche des ersten zylindrischen Körpers (40) eine Anlegestelle (42b) für die Eingangseinheit zur drehfesten Befestigung der Eingangseinheit (20) daran umfasst.

5. Eine Antriebsnabe für ein Fahrrad gemäß irgend einem der Ansprüche 2 bis 4, wobei Kugellager (31, 32), welche eine Drehung um die Nabenachse (21) ermöglichen, an den inneren Umfangsflächen des ersten zylindrischen Körpers (40) und des zweiten zylindrischen Körpers (41) angebracht sind.

6. Eine Antriebsnabe für ein Fahrrad gemäß Anspruch 5, wobei eines der Kugellager (32) zwischen der inneren Umfangsfläche des zweiten zylindrischen Körpers (41) und einer äußeren Umfangsfläche des Nachläufers (23) angeordnet ist.

7. Eine Antriebsnabe für ein Fahrrad gemäß irgend einem der Ansprüche 2 bis 6, wobei der erste zylindrische Körper (40) und der zweite zylindrische Körper (41) mit Hilfe von Innen-/ Außengewinden (41a, 43a) in beiderseits drehfester Weise miteinander verschraubt sind.

8. Eine Antriebsnabe für ein Fahrrad gemäß irgend einem der Ansprüche 2 bis 6, wobei der erste zylindrische Körper (40) und der zweite zylindrische Körper (41) mittels einer Verzahnungsverbindung in beiderseits drehfester Weise miteinander verbunden sind.

9. Eine Antriebsnabe für ein Fahrrad gemäß irgend einem der Ansprüche 2 bis 8, wobei einer der ersten und zweiten zylindrischen Körper (41) einen Anschlag (41b) aufweist, welcher am Rand des anderen zylindrischen Körpers (40) anliegt.

10. Eine Antriebsnabe für ein Fahrrad gemäß irgend einem der Ansprüche 2 bis 9, wobei der Kraftübertragungsmechanismus einen Planetenradmechanismus (24) umfasst.

11. Eine Antriebsnabe für ein Fahrrad gemäß der Anspruch 10, wobei der Planetenradmechanismus (24) umfasst:

ein Hohlrad (51), welches am ersten zylindrischen Körper angeordnet ist;
ein Sonnenrad (50), welches an der Nabenachse bereitgestellt wird;
ein oder mehrere Planetenräder (53), welche mit dem Hohlrad (51) und dem Sonnenrad (50) eingreifen; und
einem Planetenträger (52), welcher sich frei um die Nabenachse (21) drehen kann, zur drehbaren Lagerung der Planetenräder (53) ausgelegt ist und mit dem Nachläufer (23) verbunden ist; die Drehgeschwindigkeit des Antreibers reduziert und auf den Nachläufer (23) überträgt.

12. Eine Antriebsnabe für ein Fahrrad gemäß Anspruch 11, wobei die Planetenräder (53) umfassen:

ein erstes Verzahnungselement (53a) mit kleinem Durchmesser, zum Eingriff mit dem Hohlrad (51); und
ein zweites Verzahnungselement (53b) mit großem Durchmesser, welches in axialer Richtung konzentrisch mit und in der Nähe des ersten Verzahnungselements (53a) angeordnet ist, und welches für einen Eingriff mit dem Sonnenrad (50) gestaltet ist.

13. Eine Antriebsnabe für ein Fahrrad gemäß Anspruch 12, wobei der erste zylindrische Körper (40) einen großen Durchmesserbereich (43) umfasst, welcher das zweite Verzahnungselement (53b) der Planetenräder (53) beherbergt.

14. Eine Antriebsnabe für ein Fahrrad gemäß irgend einem der Ansprüche 10 bis 12, wobei das Hohlrad (51) auf der einen kleinen Durchmesser aufweisenden, inneren Umfangsfläche des ersten zylindrischen Körpers (40) ausgebildet ist.

15. Eine Antriebsnabe für ein Fahrrad gemäß irgend einem der Ansprüche 2 bis 14, weiterhin umfassend:

einen Kupplungsmechanismus (27), welcher geeignet ist, den Nachläufer (23) und den zweiten zylindrischen Körper (41) zu verbinden und zu lösen; und
einen Kupplungsschaltmechanismus (26) zum Schalten des Kupplungsmechanismus (27) zwischen einer verbundenen Stellung und einer gelösten Stellung.

16. Eine Antriebsnabe für ein Fahrrad gemäß Anspruch 15, wobei der Kupplungsschaltmechanismus (26) den Kupplungsmechanismus (27) von einer gelösten Stellung in eine verbundene Stellung mit Hilfe der Zentrifugalkraft schaltet.

**Revendications**

1. Moyeu d'entraînement pour bicyclette comprenant :

   un essieu de moyeu (21) ;
   un pignon menant (22) monté de manière rotative sur l'essieu de moyeu (21), dans lequel le pignon menant (22) comporte :

   un premier élément d'entraînement (40) présentant une partie de plus petit diamètre (42) avec une surface périphérique de plus petit diamètre ;
   un second élément d'entraînement (41) aligné dans le sens axial sur le premier élément d'entraînement (40) et couplé de manière non rotative au premier élément d'entraînement (40), dans lequel le second élément d'entraînement (41) présente une partie de plus petit diamètre avec une surface périphérique de plus petit diamètre, et dans lequel au moins un parmi le premier élément d'entraînement (40) et le second élément d'entraînement (41) présente une partie de plus grand diamètre (43) avec une surface périphérique interne de plus grand diamètre définissant un espace de logement (44) dans le sens axial entre la surface périphérique interne de plus petit diamètre du premier élément d'entraînement (40) et la surface périphérique interne de plus petit diamètre du second élément d'entraînement (41) ;
   un esclave (23) monté de manière rotative sur l'essieu de moyeu (21) ; et
   un mécanisme de transmission de puissance disposé au moins en partie dans l'espace de logement (44) destiné à modifier une vitesse de rotation du pignon menant (22) et à communiquer une puissance de rotation du pignon menant (22) à l'esclave (23) ;

   **caractérisé en ce que** l'esclave (23) comprend un carter de moyeu (60) et un corps de transmission de puissance (61), le corps de transmission de puissance (61) étant au moins en partie disposé à l'intérieur du second élément d'entraînement (41) et fixé de manière non rotative au carter de moyeu (60).

2. Moyeu d'entraînement pour bicyclette selon la revendication 1, dans lequel le premier élément d'entraînement (40) comprend un premier corps cylindrique et le second élément d'entraînement (41) comprend un second corps cylindrique.

3. Moyeu d'entraînement pour bicyclette selon la revendication 2, dans lequel le diamètre externe d'un parmi le premier ou second corps cylindrique (40, 41) est inférieur ou égal au diamètre extérieur de l'autre corps cylindrique (40, 41).

4. Moyeu d'entraînement pour bicyclette selon la revendication 2 ou 3, dans lequel une surface périphérique externe du premier corps cylindrique (40) présente un point de montage d'unité d'entrée (42b) pour la fixation non rotative d'une unité d'entrée (20) à celle-ci.

5. Moyeu d'entraînement pour bicyclette selon l'une quelconque des revendications 2 à 4, dans lequel des bagues de roulement (31, 32) destinées à permettre la rotation autour dudit essieu de moyeu (21) sont prévues sur les surfaces périphériques internes desdits premier corps cylindrique (40) et second corps cylindrique (41).

6. Moyeu d'entraînement pour bicyclette selon la revendication 5, dans lequel une des bagues de roulement (32) est située entre la surface périphérique interne du second corps cylindrique (41) et une surface périphérique externe de l'esclave (23).

7. Moyeu d'entraînement pour bicyclette selon l'une quelconque des revendications 2 à 6, dans lequel lesdits premier corps cylindrique (40) et second corps cylindrique (41) sont reliés par filetage à l'aide d'un filet interne/externe (41a, 43a) d'une manière mutuellement non rotative.

8. Moyeu d'entraînement pour bicyclette selon l'une quelconque des revendications 2 à 6, dans lequel lesdits premier corps cylindrique (40) et second corps cylindrique (41) sont reliés par une articulation à dentelure d'une manière mutuellement non rotative.

**9.** Moyeu d'entraînement pour bicyclette selon l'une quelconque des revendications 2 à 8, dans lequel un parmi lesdits premier et second corps cylindriques (41) présente une butée (41b) qui repose contre la pointe de l'autre corps cylindrique (40).

**10.** Moyeu d'entraînement pour bicyclette selon l'une quelconque des revendications 2 à 9, dans lequel le mécanisme de transmission de puissance comprend un mécanisme à roue planétaire (24).

**11.** Moyeu d'entraînement pour bicyclette selon la revendication 10, dans lequel le mécanisme à roue planétaire (24) comprend :

une roue à denture intérieure (51) disposée sur le premier corps cylindrique (40) ;
une roue solaire (50) prévue sur l'essieu de moyeu (21) ;
une ou plusieurs roue(s) planétaire(s) (53) destinées à s'engrener avec lesdites roue à denture intérieure (51) et roue solaire (50) ; et
un corps de châssis (52) qui est autorisé à tourner autour dudit essieu de moyeu (21), qui est conçu pour supporter de manière rotative lesdites roues planétaires (53), et qui est couplé au dit esclave (23) ;
la rotation dudit pignon menant (22) étant réduite en vitesse et transmise au dit esclave (23).

**12.** Moyeu d'entraînement pour bicyclette selon la revendication 11, dans lequel lesdites roues planétaires (53) comprennent :

un premier élément de roue de petit diamètre (53a) destiné à s'engrener avec ladite roue à denture intérieure (51) ; et
un second élément de roue de grand diamètre (53b) qui est disposé de manière concentrique avec, et à proximité de la direction axiale dudit premier élément de roue (53a), et qui est conçu pour s'engrener avec ladite roue solaire (50).

**13.** Moyeu d'entraînement pour bicyclette selon la revendication 12, dans lequel ledit premier corps cylindrique (40) comprend une partie de grand diamètre (43) qui reçoit le second élément de roue (53b) desdites roues planétaires (53).

**14.** Moyeu d'entraînement pour bicyclette selon l'une quelconque des revendications 10 à 12, dans lequel la roue à denture intérieure (51) est formée sur la surface périphérique interne de plus petit diamètre du premier corps cylindrique (40) .

**15.** Moyeu d'entraînement pour bicyclette selon l'une quelconque des revendications 2 à 14, comprenant en outre :

un mécanisme d'embrayage (27) capable de relier et dégager ledit esclave (23) et ledit second corps cylindrique (41) ; et
un mécanisme de commutation d'embrayage (26) destiné à commuter ledit mécanisme d'embrayage (27) entre un état relié et un état dégagé.

**16.** Moyeu d'entraînement pour bicyclette selon la revendication 15, dans lequel ledit mécanisme de commutation d'embrayage (26) commute ledit mécanisme d'embrayage (27) de l'état dégagé à l'état relié par l'intermédiaire de la force centrifuge.

Figure 1

Figure 2

Figure 3

Figure 4

( a )

Zp2 — Zr(51)
(53b)
— Zp1(53a)

— Zc(50)

( b )

— Zr(51)

— 22
— Zp1(53a)

Zp2
(53b) — Zs(50)

Figure 5

Figure 6

Figure 7

Figure 8

Figure 9

Figure 10

(a)

(b)

Figure 11